# EUROPEAN PATENT APPLICATION

(11) **EP 4 274 015 A1**
(43) Date of publication of application: **08.11.2023**
(21) Application number: 22878819.6
(22) Date of filing: 30.09.2022
(51) Int. Cl.: H01M 50/449, H01M 50/446, H01M 50/489, H01M 10/052, H01M 10/058

(54) **SEPARATOR FOR ELECTROCHEMICAL DEVICE, ELECTRODE ASSEMBLY COMPRISING SAME, AND SECONDARY BATTERY**

(30) Priority: 07.10.2021 KR 20210133515
(71) Applicant: LG Energy Solution, Ltd., Seoul 07335 (KR)
(72) Inventor: BAE, Won-Sik, Daejeon 34122 (KR); BAE, Dong-Hun, Daejeon 34122 (KR); PARK, So-Jung, Daejeon 34122 (KR); LEE, Jong-Yoon, Daejeon 34122 (KR); JEONG, So-Mi, Daejeon 34122 (KR)
(74) Representative: Hoffmann Eitle
(86) International application number: PCT/KR2022/014740
(87) International publication number: WO 2023/058998

(57) **Abstract**

The present disclosure relates to a separator for an electrochemical device, and an electrode assembly and secondary battery including the same. The separator for an electrochemical device includes: a porous polymer substrate; and a porous coating layer formed on at least one surface of the porous polymer substrate, and including a binder polymer and inorganic particles, wherein the thickness of the separator at both ends thereof in the transverse direction (TD) is larger than the thickness of the separator at the central portion thereof in TD. The separator prevents generation of a deficiency in adhesion at both ends in TD upon the adhesion of the separator with the electrodes and shows uniform adhesion by controlling the thickness of both ends of the separator in TD.

## Description

### TECHNICAL FIELD

The present disclosure relates to a separator for an electrochemical device, and an electrode assembly and secondary battery including the same.

The present application claims priority to Korean Patent Application No. 10-2021-0133515 filed on October 7, 2021 in the Republic of Korea, the disclosures of which are incorporated herein by reference.

### BACKGROUND ART

Rechargeable lithium secondary batteries have been spotlighted as substitutes for fossil energy. Lithium secondary batteries have been used frequently for conventional hand-held devices, such as cellular phones, video cameras and power tools. However, recently, application of such lithium secondary batteries tends to be extended gradually to electrically driven vehicles (EVs, HEVs, PHEVs), large-capacity energy storage systems (ESSs), uninterruptible power supply systems (UPSs), or the like.

A lithium secondary battery includes an electrode assembly including a positive electrode, a negative electrode and a separator interposed between both electrodes, and an electrolyte which reacts electrochemically with the active material coated on each of the positive electrode and negative electrode. A typical example of such lithium secondary batteries is a lithium-ion secondary battery in which lithium ions function as driving ions during charge and discharge to cause electrochemical reactions at the positive electrode and negative electrode. In the case of conventional lithium-ion secondary batteries, lamination is used in an assemblage step in order to realize the adhesion between the electrodes and the separator in the electrode assembly. Such lamination is a process of binding the separator with the electrodes. Lamination is configured to apply pressure and heat to the longitudinally stacked separator and electrodes, resulting in an increase in the adhesion between the separator and the electrodes.

In general, an electrode, which is a positive electrode or a negative electrode, is manufactured by applying an active material slurry onto a current collector, followed by drying. However, when the active material slurry is applied onto the current collector, a so-called sliding phenomenon occurs, wherein the active material slurry flows down toward both ends in the transverse direction (TD). As a result, an active material layer having a thickness decreasing toward both ends in TD is formed.

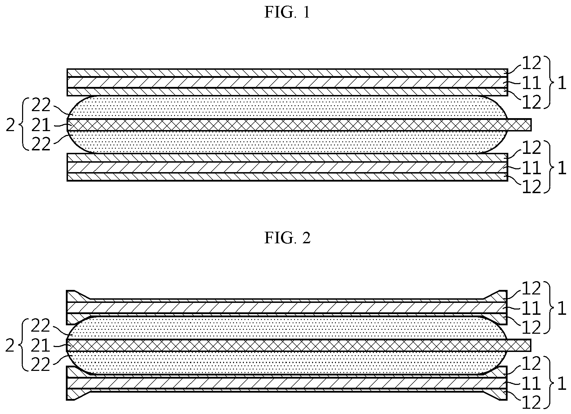

Referring to FIG. 1, there is shown a general structure including electrodes and a separator, stacked successively. As can be seen from FIG. 1, a separator 1 includes a porous coating layer 12 having a predetermined thickness on at least one surface of a porous polymer substrate 11, and an electrode 2 includes an active material layer 22 on at least one surface of a current collector 21. The active material layer 22 has a thickness decreasing gradually toward both ends in TD. Therefore, there is a problem in that even when the separator and the electrodes are laminated, the adhesion is significantly low at both ends in TD due to a deficiency in thickness at both ends of the electrode in TD. In a severe case, the separator cannot be adhered with the electrodes but an interlayer separation phenomenon occurs undesirably.

### DISCLOSURE

### Technical Problem

The present disclosure is designed to solve the problems of the related art, and therefore the present disclosure is directed to providing a separator for an electrochemical device which prevents generation of a deficiency in adhesion at both ends in the transverse direction (TD) upon the adhesion of the separator with the electrodes, and shows uniform adhesion throughout the separator-electrode interface.

The present disclosure is also directed to providing an electrode assembly and secondary battery including the separator.

It will be easily understood that these and other objects and advantages of the present disclosure may be realized by the means or methods shown in the appended claims and combinations thereof.

### Technical Solution

In one aspect of the present disclosure, in order to solve the above-mentioned problems, there is provided a separator for an electrochemical device, and an electrode assembly and secondary battery including the same, according to any one of the following embodiments.

According to the first embodiment of the present disclosure, there is provided a separator for an electrochemical device, including:
a porous polymer substrate; and
a porous coating layer formed on at least one surface of the porous polymer substrate, and including a binder polymer and inorganic particles,
wherein the thickness of the separator at both ends thereof in the transverse direction (TD) is larger than the thickness of the separator at the central portion thereof in TD.

According to the second embodiment of the present disclosure, there is provided the separator for an electrochemical device as defined in the first embodiment, wherein the thickness of the separator at both ends thereof in TD is larger than the thickness of the separator at the central portion thereof in TD by 5-100%.

According to the third embodiment of the present disclosure, there is provided the separator for an electrochemical device as defined in the first or the second embodiment, wherein both ends of the separator in TD include a region having a thickness increasing gradually along the direction away from the central portion thereof in TD.

According to the fourth embodiment of the present disclosure, there is provided the separator for an electrochemical device as defined in any one of the first to the third embodiments, wherein one end of the both ends of the separator in TD has a length corresponding to 0.1-10% of the total length of the separator in TD.

According to the fifth embodiment of the present disclosure, there is provided an electrode assembly, including:
an electrode including a current collector and an active material layer disposed on at least one surface of the current collector; and
a separator disposed on at least one surface of the electrode,
wherein the separator includes:
   a porous polymer substrate; and
   a porous coating layer formed on at least one surface of the porous polymer substrate, and including a binder polymer and inorganic particles,
   wherein the thickness of the separator at both ends thereof in the transverse direction (TD) is larger than the thickness of the separator at the central portion thereof in TD.

According to the sixth embodiment of the present disclosure, there is provided the electrode assembly as defined in the fifth embodiment, wherein the thickness of the separator at both ends thereof in TD is larger than the thickness of the separator at the central portion thereof in TD by 5-100%.

According to the seventh embodiment of the present disclosure, there is provided the electrode assembly as defined in the fifth or the sixth embodiment, wherein both ends of the separator in TD has a shape corresponding to the shape of both ends of the active material layer in TD.

According to the eighth embodiment of the present disclosure, there is provided the electrode assembly as defined in any one of the fifth to the seventh embodiments, wherein both ends of the separator in TD include a region having a thickness increasing gradually along the direction away from the central portion thereof in TD, and
both ends of the active material layer in TD include a region having a thickness decreasing gradually along the direction away from the central portion thereof in TD.

According to the ninth embodiment of the present disclosure, there is provided the electrode assembly as defined in any one of the fifth to the eighth embodiments, wherein one end of the both ends of the separator in TD has a length corresponding to 0.1-10% of the total length of the separator in TD.

According to the tenth embodiment of the present disclosure, there is provided a secondary battery including the electrode assembly as defined in any one of the fifth to the ninth embodiments.

According to the eleventh embodiment of the present disclosure, there is provided the secondary battery as defined in the tenth embodiment, which is a lithium secondary battery.

### Advantageous Effects

In the separator for an electrochemical device of the present disclosure, and the electrode assembly and secondary battery including the same, the separator has a structure in which both ends of the separator in the transverse direction (TD) have a thickness controlled according to the thickness of both ends of the active material layer in TD. In this manner, it is possible to prevent generation of a deficiency in adhesion at both ends in TD upon the adhesion of the separator with the electrodes, and to realize uniform adhesion throughout the separator-electrode interface.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 is a schematic sectional view illustrating the structure including a separator and electrodes stacked successively according to the related art.
FIG. 2 is a schematic sectional view illustrating the structure including a separator and electrode stacked successively according to an embodiment of the present disclosure.
FIG. 3 is a schematic sectional view illustrating the structure of a coating bar used for manufacturing the separator according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Throughout the specification, the expression `a part includes or comprises an element' does not preclude the presence of any additional elements but means that the part may further include the other elements.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression `A and/or B' means 'A, B or both of them'.

The present disclosure relates to a separator for an electrochemical device, and an electrode assembly and secondary battery including the same.

### Separator for Electrochemical Device

The electrochemical device according to the present disclosure includes any device which carries out electrochemical reaction, and particular examples thereof include all types of primary batteries, secondary batteries, fuel cells, solar cells or capacitors, such as super capacitor devices. Particularly, the electrochemical device may be a lithium secondary battery including a lithium metal secondary battery, a lithium-ion secondary battery, a lithium polymer secondary battery, a lithium-ion polymer secondary battery, or the like.

According to the present disclosure, the separator may include a porous polymer substrate and a porous coating layer formed on at least one surface of the porous polymer substrate.

In the separator according to the present disclosure, both ends of the separator in TD have a larger thickness as compared to the thickness in the central portion in TD. For example, both ends of the separator in TD may have a thickness larger than the thickness of the central portion in TD by about 5-100%, or about 10-50%. In a variant, both ends of the separator in TD may include a region having a thickness increasing gradually along the direction away from the central portion in TD. According to the present disclosure, it is possible to improve the phenomenon of a deficiency in adhesion occurring at both ends in TD and to ensure a sufficient level of adhesion upon the lamination of the separator with the electrodes by setting the thickness of both ends of the separator in TD to a larger thickness as compared to the thickness of the central portion in TD.

As used herein, TD (transverse direction) refers to the width direction of the separator, i.e. the direction perpendicular to MD (machine direction or longitudinal direction) of the separator.

Particularly, in order to set the thickness of both ends of the separator in TD to a larger thickness as compared to the thickness of the central portion in TD, the porous coating layer may have a larger thickness at both ends in TD as compared to the thickness of the central portion in TD, while maintaining the overall thickness of the porous polymer substrate uniformly. For example, both ends of the porous coating layer in TD may have a thickness larger than the thickness of the central portion in TD by 10-150%, or about 30-80%. In a variant, both ends of the porous coating layer in TD may include a region having a thickness increasing gradually along the direction away from the central portion in TD.

In order to set the thickness of both ends of the separator in TD to a larger thickness as compared to the thickness of the central portion in TD, a step of coating a porous coating layer on at least one surface of a porous polymer substrate may be controlled. Particularly, the design of a coating bar that may be used for coating the porous coating layer may be controlled to adjust the thickness of each region of the porous coating layer.

In general, a slurry is supplied first to the coating bar so that the slurry may be applied to form a porous coating layer on at least one surface of a porous polymer substrate, and then the slurry may be transferred to the porous polymer substrate, while the coating bar is rotated in contact with one surface of the porous polymer substrate. The coating bar may be a wire bar including a cylindrical bar wound with a wire, wherein the slurry is received between the adjacent wires, and the slurry may be transferred to and coated on the porous polymer substrate. The transferred slurry is applied, and the vacant spaces in a pattern is filled with the slurry by virtue of the flowability of the slurry. In this manner, it is possible to form a porous coating layer having a substantially uniform thickness.

For example, in another method for applying a slurry, the slurry is applied to at least one surface of a porous polymer substrate, and a predetermined coating bar is rotated in contact with one surface of the porous polymer substrate. In this manner, it is possible to form a porous coating layer having a substantially uniform thickness. However, the method for applying a slurry to form a porous coating layer is not limited to the above-mentioned methods.

According to the present disclosure, the design of the cylindrical bar and wire may be controlled to adjust the thickness of each region of the porous coating layer. For example, according to an embodiment of the present disclosure, both ends of the cylindrical bar may have a diameter smaller than the diameter of the central portion thereof. In addition, the wire wound on both ends of the cylindrical bar may have a diameter larger than the diameter of the wire wound on the central portion thereof. In this manner, the amount of the coating solution received between the wires wound on both ends of the cylindrical bar becomes larger than the amount of the coating solution received between the wires wound on the central portion of the cylindrical bar, and thus the thickness of both ends of the porous coating layer may be controlled.

According to the present disclosure, `both ends of the separator in TD' refers to both ends of the separator in the width direction. In addition, `both ends of the separator in TD' may refer to the portions corresponding to portions in which the thickness of an active material layer is decreased.

Particularly, the length of one of the both ends of the separator may be about 0.1-10%, or about 0.2-5%, based on the total length of the separator in the width direction. When the ends of the separator are set to have the above-defined range of length, it is possible to prevent weakening of the adhesion to an electrode, and thus to realize uniform adhesion throughout the electrode-separator interface. In addition, when the content of a binder resin is increased or a separate adhesive layer is formed in order to ensure the adhesion between the separator and the electrode, the battery cell shows increased resistance, or the separator has an increased thickness, resulting in loss of the capacity of the battery cell. However, it is possible to prevent loss of the capacity of a secondary battery merely by forming both ends of the separator in TD to have a larger thickness.

FIG. 2 is a schematic section view illustrating the structure in which a separator 1 and electrodes 2 are stacked according to an embodiment of the present disclosure. In FIG. 2, a pair of separators are stacked with the electrodes at the boundary, but a plurality of electrodes and/or separators may be stacked.

The separator as shown in FIG. 2 is formed to have such a structure that both ends of the separator may have a thickness increasing gradually along the direction away from the central portion.

According to the present disclosure, the porous polymer substrate refers to a substrate which functions as a porous ion-conducting barrier that allows ions to pass therethrough, while interrupting an electrical contact between a negative electrode and a positive electrode, and has a plurality of pores formed therein. The pores are interconnected so that gases or liquids may pass from one surface of the substrate to the other surface of the substrate. A porous polymer film including a thermoplastic resin may be used as the porous polymer substrate with a view to imparting a shutdown function. Herein, the term `shutdown function' refers to a function of melting of the thermoplastic resin to close the pores of the porous polymer substrate when the temperature of a battery is increased, thereby interrupting migration of ions and preventing the thermal runaway of a battery. Non-limiting examples of the thermoplastic resin include polyolefin resins, such as polyethylene, polypropylene, polybutylene, polypentene, or the like. Meanwhile, the thermoplastic resin preferably has a melting point of less than about 200°C with a view to such a shutdown function.

The thickness of the porous polymer substrate is not particularly limited, but the thickness may be particularly 1-100 µm, more particularly 5-50 µm, or about 5-30 µm. Also, the porosity of the porous polymer substrate is not particularly limited, but the porosity may be about 10-95%, or preferably about 35-65%.

The porous coating layer is formed on at least one surface of the porous polymer substrate and may include inorganic particles and a binder resin.

According to the present disclosure, in the porous coating layer, the inorganic particles are bound to one another by means of the binder resin, while they are substantially in contact with one another. The interstitial volumes formed among the inorganic particles may become vacant spaces to form pores.

In addition, according to an embodiment of the present disclosure, the weight ratio of the inorganic particles to the binder resin in the porous coating layer may be 99: 1-50:50.

According to the present disclosure, the binder resin is not particularly limited, as long as it can provide binding force among the inorganic particles and binding force between the porous coating layer and an electrode. For example, the binder resin may be any one selected from the group consisting of polyvinylidene fluoride-co-hexafluoropropylene (PVDF-co-HFP), polyvinylidene fluoride-co-trichloroethylene, polyvinylidene fluoride-co-chlorotrifluoroethylene, polymethyl (meth)acrylate, polyethyl (meth)acrylate, poly n-propyl (meth)acrylate, polyisopropyl (meth)acrylate, poly n-butyl (meth)acrylate, poly t-butyl (meth)acrylate, poly sec-butyl (meth)acrylate, polypentyl (meth)acrylate, poly 2-ethylbutyl (meth)acrylate, poly 2-ethylhexyl (meth)acrylate, poly n-octyl (meth)acrylate, polyisooctyl (meth)acrylate, polyisononyl (meth)acrylate, polylauryl (meth)acrylate, polytetradecyl (meth)acrylate, poly N-vinylpyrrolidone, polyacrylonitrile, polyvinyl acetate, polyethylene-co-vinyl acetate, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, acrylonitrile-styrene-butadiene copolymer and polyimide, or a mixture of two or more of them.

In addition, the binder resin may be a particle-type binder polymer resin. For example, the binder resin may include acrylic copolymer, styrene-butadiene rubber, or a mixture of two or more of them, wherein the acrylic copolymer may include polyethylhexyl acrylate-co-methyl methacrylate, polymethyl methacrylate, polyethylhexyl acrylate, polybutyl acrylate, polyacrylonitrile, polybutyl acrylate-co-methyl methacrylate, or a mixture of two or more of them.

According to the present disclosure, there is no particular limitation in the inorganic particles, as long as they are electrochemically stable. In other words, there is no particular limitation in the inorganic particles, as long as they cause no oxidation and/or reduction in the range (e.g. 0-5 V based on Li/Li⁺) of operating voltage of an applicable electrochemical device. Particular examples of the inorganic particles include: ZrO₂, BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, SiC or a mixture thereof. In addition, particular examples of the inorganic particles may further include lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (0 < x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x < 4, 0 < y < 2), SiS₂-based glass (LiₓSi_{y}S_{z}, 0 < x < 3, 0 < y < 2, 0 < z < 4), P₂S₅-based glass (LiₓP_{y}S_{z}, 0 < x < 3, 0 < y < 3, 0 < z < 7), or two or more of them.

### Electrode Assembly

The electrode assembly according to the present disclosure includes an electrode and a separator disposed on one surface of the electrode.

According to the present disclosure, the electrode assembly may be stacked in a stacked type or a stacked-folded type to form a secondary battery, or may be wound in a jelly-roll shape to form a secondary battery.

The battery casing configured to receive the electrode assembly may have various shapes. For example, the battery casing may include a pouch-like casing, a cyclindrical casing or a prismatic casing.

In the electrode assembly according to the present disclosure, the electrode may include a current collector and an active material layer disposed on at least one surface of the current collector. The separator may include a porous polymer substrate; and a porous coating layer formed on at least one surface of the porous polymer substrate, and including a binder polymer and inorganic particles. In the electrode assembly according to the present disclosure, the separator is the same as described above.

In general, an electrode is manufactured by applying an active material slurry on a current collector, followed by drying. However, when the active material slurry is applied onto the current collector, a so-called sliding phenomenon occurs, wherein the active material slurry flows down toward both ends in the transverse direction (TD). As a result, an active material layer having a thickness decreasing toward both ends in TD is formed. Therefore, when electrodes are laminated with a separator, there is a fundamental problem in that a sufficient level of adhesion cannot be ensured in a region where the phenomenon of sliding of active material slurry occurs. Under these circumstances, the present disclosure is directed to solving the above-mentioned problem by controlling the thickness of the separator.

According to an embodiment of the present disclosure, both ends of the separator in TD has a larger thickness as compared to the thickness in the central portion in TD. For example, both ends of the separator in TD may have a thickness larger than the thickness of the central portion in TD by about 5-100%, or about 10-50%.

According to another embodiment of the present disclosure, both ends of the separator in TD may have a shape corresponding to the shape of both ends of the active material layer in TD.

According to still another embodiment of the present disclosure, both ends of the active material layer in TD may include a region having a thickness decreasing gradually along the direction away from the central portion in TD, and both ends of the separator in TD may include a region having a thickness increasing gradually along the direction away from the central portion in TD.

According to the present disclosure, the electrode may be a positive electrode and/or a negative electrode.

For example, the positive electrode may be obtained by applying a mixture of a positive electrode active material, a conductive material and a binder onto a positive electrode current collector, followed by drying. If necessary, a filler is further added to the mixture.

Particular examples of the positive electrode active material include, but are not limited to: layered compounds, such as lithium cobalt oxide (LiCoO₂) and lithium nickel oxide (LiNiO₂), or those compounds substituted with one or more transition metals; lithium manganese oxides, such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiVsOs, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1) or Li₂Mn₃MO₈ (wherein M is Fe, Co, Ni, Cu or Zn); LiMn₂O₄ in which Li is partially substituted with an alkaline earth metal ion; disulfide compounds; Fe₂(MoO₄)₃; or the like.

In general, the positive electrode current collector is formed to have a thickness of about 3-500 µm. The positive electrode current collector is not particularly limited, as long as it causes no chemical change in the corresponding battery and has high conductivity. Particular examples of the positive electrode current collector may include stainless steel, aluminum, nickel, titanium, baked carbon, aluminum or stainless steel surface-treated with carbon, nickel, titanium or silver, or the like. In addition, fine surface irregularities may be formed on the surface of the positive electrode current collector to enhance the adhesion to the positive electrode active material. The positive electrode current collector may have various shapes, including a film, a sheet, a foil, a net, a porous body, a foam, a nonwoven web, or the like.

In general, the conductive material may be added in an amount of 1-50 wt% based on the total weight of the mixture including the positive electrode active material. The conductive material is not particularly limited, as long as it causes no chemical change in the corresponding battery and has conductivity. Particular examples of the conductive material include: graphite, such as natural graphite or artificial graphite; carbon black, such as acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; conductive materials, such as polyphenylene derivatives, or the like.

The binder is an ingredient which assists binding between the active material and the conductive material and binding to the current collector. In general, the binder may be added in an amount of 1-50 wt% based on the total weight of the mixture including the positive electrode active material. Particular examples of the binder include polyvinylidene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene terpolymer (EPDM), sulfonated EPDM, styrene-butadiene rubber, fluoro-rubber, various copolymers, or the like.

The filler is used optionally as an ingredient inhibiting the positive electrode from swelling, and is not particularly limited, as long as it is a fibrous material, while not causing any chemical change in the corresponding battery. Particular examples of the filler may include olefinic polymers, such as polyethylene and polypropylene; and fibrous materials, such as glass fibers and carbon fibers.

The negative electrode may be obtained by applying a negative electrode material onto a negative electrode current collector, followed by drying. If necessary, the negative electrode active material may further include the above-mentioned ingredients.

In general, the negative electrode current collector is formed to have a thickness of about 3-500 µm. The negative electrode current collector is not particularly limited, as long as it causes no chemical change in the corresponding battery and has high conductivity. Particular examples of the negative electrode current collector may include copper, stainless steel, aluminum, nickel, titanium, baked carbon, copper or stainless steel surface-treated with carbon, nickel, titanium or silver, aluminum-cadmium alloy, or the like. In addition, similarly to the positive electrode current collector, fine surface irregularities may be formed on the surface of the negative electrode current collector to enhance the adhesion to the negative electrode active material. The negative electrode current collector may have various shapes, including a film, a sheet, a foil, a net, a porous body, a foam, a nonwoven web, or the like.

Particular examples of the negative electrode active material include: carbon such as non-graphitizable carbon or graphite-based carbon; metal composite oxides, such as LiₓFe₂O₃ (0 ≤ x ≤ 1), LiₓWO₂ (0 ≤ x ≤ 1), SnₓMe₁₋ₓMe'_{y}O_{z} (Me: Mn, Fe, Pb, Ge; Me': Al, B, P, Si, elements of Group 1, 2 or 3 in the Periodic Table, halogen; 0 < x ≤ 1; 1 ≤ y ≤ 3; 1 ≤ z ≤ 8); lithium metal; lithium alloy; silicon-based alloy; tin-based alloy; metal oxides, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers, such as polyacetylene; Li-Co-Ni type materials; or the like.

In addition, the present disclosure provides a secondary battery including the electrode assembly, a battery module including the secondary battery as a unit cell, a battery pack including the battery module, and a device including the battery pack as an electric power source. Particular examples of the device include, but are not limited to: power tools driven by the power of an electric motor; electric cars, including electric vehicles (EVs), hybrid electric vehicles (HEVs), plug-in hybrid electric vehicles (PHEVs), or the like; electric two-wheeled vehicles, including E-bikes and E-scooters; electric golf carts; electric power storage systems; or the like.

Hereinafter, the examples of the present invention will be described in details in a manner that the person with ordinary skills in the field that the present invention pertains to could readily practice. However, the present invention could be embodied in many different forms and should not be explained as being limited to the examples set forth herein.

### Examples

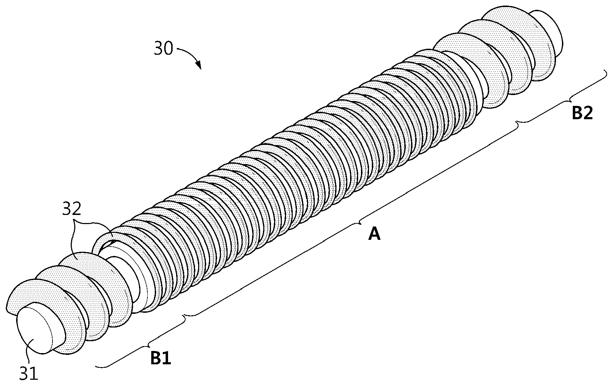

Each of Examples and Comparative Examples was prepared in the manner as described hereinafter. Examples and Comparative Examples will be explained hereinafter with reference to FIG. 3 and Tables 1 and 2.

### Example 1

Prepared were a polyethylene porous substrate (thickness 9 µm, porosity 45%), and a slurry containing polyvinylidene fluoride as a binder polymer, alumina (Al₂O₃) as inorganic particles (particle size 50 nm) and acetone as a solvent.

The slurry was applied to one surface of the porous substrate by using a coating bar and then dried to obtain a separator.

The coating bar used herein has the structure as shown in FIG. 3. In FIG. 3, the coating bar 30 includes a cylindrical bar 31 on which a wire 32 is wound, wherein a wire having a larger diameter is wound at both ends B1 and B2, while a wire having a smaller diameter is wound at the central portion A.

The coating bar has a total length of 250 mm, the central portion A has a length of 200 mm, and each of both ends B1 and B2 has a length of 25 mm. The coating bar used herein has a constant external diameter, the cylindrical bar has a diameter of 12.7 mm at the central portion A, the wire wound on the cylindrical bar at the central portion A has a diameter of 0.4 mm, the cylindrical bar has a diameter of 12.5 mm at both ends B1 and B2 thereof, and the wire wound at both ends B1 and B2 of the cylindrical bar has a diameter of 0.5 mm.

### Examples 2 and Comparative Examples 1 and 2

A separator was obtained in the same manner as Example 1, except that slurry was coated, while the diameter of the central portion A of the coating bar, diameter of the cylindrical bar at both ends B1 and B2 thereof and the diameter of the wire wound on each of the central portion A and both ends B1 and B2 were changed as shown in the following Table 1.

**[Table 1]**

| | Central portion (A) | | | | Both ends (B1 and B2) | | | |
|---|---|---|---|---|---|---|---|---|
| | Diameter of cylindrical bar | Diameter of wire | Thickness of porous coating layer | Thickness of separator | Diameter of cylindrical bar | Diameter of wire | Thickness of porous coating layer | Thickness of separator |
| Ex. 1 | 12.7 mm | 0.4 mm | 3.2 µm | 12.2 µm | 12.5 mm | 0.5 mm | 4.5 µm | 13.5 µm |
| Ex. 2 | 12.7 mm | 0.4 mm | 3.3 µm | 12.3 µm | 12.3 mm | 0.6 mm | 5.3 µm | 14.3 µm |
| Comp. Ex. 1 | 12.7 mm | 0.4 mm | 3.2 µm | 12.2 µm | 12.7 mm | 0.4 mm | 3.2 µm | 12.2 µm |
| Comp. Ex. 2 | 12.7 mm | 0.5 mm | 4.3 µm | 13.3 µm | 12.7 mm | 0.5 mm | 4.3 µm | 13.3 µm |

**[Table 2]**

| | Adhesion to electrode (A) | Adhesion to electrode (B1 and B2) |
|---|---|---|
| Ex. 1 | 62 gf/25 mm | 59 gf/25 mm |
| Ex. 2 | 59 gf/25 mm | 67 gf/25 mm |
| Comp. Ex. 1 | 65 gf/25 mm | 11 gf/25 mm |
| Comp. Ex. 2 | 78 gf/25 mm | 17 gf/25 mm |

Particularly, the adhesion to an electrode (Lami strength, gf/25 mm) was evaluated as follows. First, an active material (natural graphite and artificial graphite (weight ratio 5:5)), conductive material (Super P) and a binder (polyvinylidene fluoride (PVDF)) were mixed at a weight ratio of 92:2:6, and the resultant mixture was dispersed in water. Then, the resultant mixture was coated on copper foil with a width of 250 mm to obtain a negative electrode.

A separator having a width of 250 mm was prepared in the same manner as Examples 1 and 2 and Comparative Examples 1 and 2.

The prepared separator was laminated with the negative electrode, the laminated product was inserted between PET films having a thickness of 100 µm, and the separator and the negative electrode were adhered to each other by using a roll lamination machine. The roll lamination machine was used under the condition of a temperature of 60°C, a pressure of 2.4 kgf/mm and a speed of 5 m/min.

The adhered separator and negative electrode were cut into a size of a width of 25 mm and a length of 70 mm to have a central portion A and both ends B1 and B2. Then, the end portion of the separator and negative electrode was mounted to a UTM instrument (available from Instron), force was applied thereto at 180° and a rate of 300 mm/min, and the force required for separating the negative electrode from the separator adhered thereto was measured.

### [Description of Drawing Numerals]

1: Separator
11: Porous polymer substrate
12: Porous coating layer
2: Electrode
21: Current collector
22: Active material layer
30: Coating bar
31: Cylindrical bar
32: Wire
A: Central portion
B1, B2: End

## Claims

1. A separator for an electrochemical device, comprising:
a porous polymer substrate; and
a porous coating layer formed on at least one surface of the porous polymer substrate, and comprising a binder polymer and inorganic particles,
wherein the thickness of the separator at both ends thereof in the transverse direction (TD) is larger than the thickness of the separator at the central portion thereof in TD.

2. The separator for an electrochemical device according to claim 1, wherein the thickness of the separator at both ends thereof in TD is larger than the thickness of the separator at the central portion thereof in TD by 5-100%.

3. The separator for an electrochemical device according to claim 1, wherein both ends of the separator in TD comprise a region having a thickness increasing gradually along the direction away from the central portion thereof in TD.

4. The separator for an electrochemical device according to claim 1, wherein one end of the both ends of the separator in TD has a length corresponding to 0.1-10% of the total length of the separator in TD.

5. An electrode assembly, comprising:
an electrode comprising a current collector and an active material layer disposed on at least one surface of the current collector; and
a separator disposed on at least one surface of the electrode,
wherein the separator comprises:
a porous polymer substrate; and
a porous coating layer formed on at least one surface of the porous polymer substrate, and comprising a binder polymer and inorganic particles,
wherein the thickness of the separator at both ends thereof in the transverse direction (TD) is larger than the thickness of the separator at the central portion thereof in TD.

6. The electrode assembly according to claim 5, wherein the thickness of the separator at both ends thereof in TD is larger than the thickness of the separator at the central portion thereof in TD by 5-100%.

7. The electrode assembly according to claim 5, wherein both ends of the separator in TD have a shape corresponding to the shape of both ends of the active material layer in TD.

8. The electrode assembly according to claim 5, wherein both ends of the separator in TD comprise a region having a thickness increasing gradually along the direction away from the central portion thereof in TD, and
both ends of the active material layer in TD include a region having a thickness decreasing gradually along the direction away from the central portion thereof in TD.

9. The electrode assembly according to claim 5, wherein one end of the both ends of the separator in TD has a length corresponding to 0.1-10% of the total length of the separator in TD.

10. A secondary battery comprising the electrode assembly as defined in any one of claims 5 to 9.

11. The secondary battery according to claim 10, which is a lithium secondary battery.
